# EUROPEAN PATENT APPLICATION

(11) **EP 2 264 602 A1**
(43) Date of publication of application: **22.12.2010**
(21) Application number: 09305555.6
(22) Date of filing: 17.06.2009
(51) Int. Cl.: G06F 12/02

(54) **Memory device for managing the recovery of a non volatile memory**

(71) Applicant: Gemalto SA, 92190 Meudon (FR)
(72) Inventor: Daures, Daniel, 92197, MEUDON CEDEX (FR)

(57) **Abstract**

The invention relates to a memory device (3), comprising:
-a first non volatile memory (1) accessible in reading, writing and/or erasing by blocks;
-a microcontroller (31) including a second non volatile memory (32) accessible in reading, writing and/or erasing by blocks of a size smaller than the first non volatile memory;
-a flash translation layer function (36) :
-recording events and states for block processing of the first non volatile memory in a context metadata log (33) in said second non volatile memory (32), an event indicating the blocks of the first non volatile memory (1) used at the time of its record;
-managing the read/write access to the blocks of the first non volatile memory using the blocks indicated in the last recorded event as the current used blocks when no accidental power off is detected.

## Description

The present invention generally relates to the management of non volatile memories and more particularly to the management of the flash translation layer managing a flash memory device, like a NAND-Flash memory.

Flash memories are commonly found in consumer electronic products. Flash memory is valued in many applications as a storage media due to its fast access speeds, low-power and nonvolatile operation.

Flash memories only allow two states: erased and non-erased. In the erased state, a byte can be either all ones (0xFF) or all zeroes (0x00) depending on the flash device. A bit of data may only be written when it is initially in an erase state. After it is written to, the bit is considered unusable. In order to return the bit to its erase state, a whole memory area called erase zone or erase block must be erased. A block defines the smallest unit that can be erased in the NAND-Flash in a single operation. Flash technology does not allow the toggling of individual bits or bytes from a non-erased state back to an erased state.

Among the various types of flash memories, the NAND-Flash memories are commonly found in embedded systems. A NAND-flash memory is organized into fixed-size pages (for example 512 bytes per page) and a number of pages constitutes a block (for example 32 pages per block). A page defines the smallest unit that can be written in the NAND-Flash in a single operation. The page size thus defines the writing granularity of the NAND-Flash. These access characteristics of the NAND flash memory induce management difficulties.

To have a NAND flash memory work under an existing file system and format (such as FAT16/32, NTFS, EXT2, etc...), the most frequently adopted approach is to maintain an address translation table in map blocks. The address translation table maps logical addresses to physical addresses of the NAND flash memory. As such, the NAND flash memory can be simulated into a continuous memory space and, without altering the existing file system and format, the NAND flash memory can be treated as, for example, a hard disk. This approach is referred to as the NAND flash translation layer (FTL). The FTL is usually software executed by a microcontroller included in the NAND Flash memory. The FTL shields the file system from the erasing details and remaps the data passed to it by writing to unused data areas. When a data block is modified, the file system sees a simple overwriting operation of a given page when new data is in fact written somewhere else on another page. In known FTLs, the NAND Flash memory itself stores both external user data and internal meta-data.

The essential role of metadata is to allow the NAND Flash recovery at power on time. To avoid a systematic check of the state of each page of the blocks, the FTL uses context metadata. A context metadata entry (also called event in the remainder of the document) recites the currently used data log block, the currently used map log block, the free blocks list and the possible block under garbage collection. The context metadata log lists the history of block processing and the state of the processing. Based on the context metadata, the FTL can boost its updating process when the NAND flash is rebooted. The time needed for retrieving a functional state of the NAND-Flash is reduced, which is particularly convenient for devices expecting an immediate turn on, like mobile phones or PDAs.

Usually, a given number of NAND blocks are reserved for logging the successive entries of the context metadata. These blocks remain the same in order to facilitate the context retrieval at the boot stage. Granularity is limited by the size of the pages within these blocks, say between 256 and 4096 bytes. Due to the write access at the page level for a NAND Flash, an atomic update for a context entry (typically 16 to 32 bytes) leads to a writing operation in a very oversized NAND area. If a limited number of blocks are reserved for storing the context metadata log, each page of these blocks is written to very often to update the context metadata entries. A NAND Flash block has a limited life expectancy. The block is prone to weariness and may become unserviceable after a number of write/erase operations (typically 100000 cycles for a single level cell NAND flash). These data blocks may then reach their lifetime much more rapidly than the remaining data blocks. The NAND-Flash can then become unserviceable though most of its blocks are still operational. If a great number of blocks are reserved for storing the context log, the life expectancy of these blocks is significantly increased. However, the number of blocks still available for storing data is reduced correspondingly.

To limit the writing operations in the context metadata NAND blocks and avoid the system to be slowed down, it has been proposed to store the context metadata entries in a RAM buffer. The RAM buffer content is saved into context metadata NAND blocks at regular intervals. Due to the page size writing granularity of the NAND-Flash, this saving operation is not carried out at a high frequency. When power off occurs before the RAM buffer is saved into the context log area of the NAND-Flash, several entries are lost and the context cannot be fully retrieved at the next power up.

It has been suggested to store context metadata in the extra spare area of each page to overcome this problem. Extra spare area of a page is a data area of usually 16 to 64 bytes. Using the extra spare area for context metadata could improve the granularity available for its writing. However, this would induce separate writing operations for the page and its spare area. Consequently, the I/O rate of the NAND Flash would be severely degraded. Thus, using such a context metadata storage is not realistic.

Bad blocks may appear throughout the NAND Flash during the lifetime or even directly at the end of the manufacturing process. Therefore, the FTL has to manage the bad block replacement. Several blocks are initially reserved as spare blocks in the FTL design. Once a write/erase error is detected for a block, the FTL replaces this bad block by a spare one. Therefore, the FTL manages a bad block table stored for instance in block 0. This table identifies each bad block. The correct working of the bad block table is essential since it has to be checked at each NAND-Flash Input/Output. Due to this read access frequency, the bad block table is also duplicated in RAM to provide a fast access. The persistent copy of the bad block table may be saved in a reserved area of the NAND-Flash. The bad block table is used to restore the RAM duplicate after a power on. The NAND-Flash manufacturers guarantee a maximum number of bad blocks appearing during the NAND-Flash lifetime (typically 2% of the blocks). The bad block table thus has a limited number of entries for managing this number of bad blocks. Unlike most of the blocks of the NAND-Flash, this reserved area is not likely to be affected by wear since write/erase accesses to it are limited.

However, the bad block table permanently occupies memory space in cache, which is a very limited resource in some devices like electronic tokens, smartcards or portable devices. Moreover, due to the large write granularity, the bad block writing operation is carried out in a very oversized NAND area. Therefore, the memory space allocated to the bad block table in NAND Flash has to be significantly oversized in view of the amount of data practically stored. Thus, the number of blocks still available for storing data is reduced correspondingly.

For recovery purposes, the FTL may also store some configuration data like the logical space size or the mapping space size in block 0 of the NAND Flash in a reserved area. The reserved area is very oversized in view of the practical amount of data to store. Thus, the number of blocks still available for storing data is reduced correspondingly.

Thus, there is a need for a memory device overcoming at least one of these drawbacks. The invention proposes a memory device, comprising:
- a first non volatile memory, said first non volatile memory being accessible in reading, writing and/or erasing by blocks;
- a microcontroller including a second non volatile memory, said second non volatile memory being accessible in reading, writing and/or erasing by blocks of a size smaller than the first non volatile memory;
- a flash translation layer function:
   - managing the read/write access to the blocks of the first non volatile memory;
   - recording events and states for block processing of the first non volatile memory in a context metadata log in said second non volatile memory, an event indicating the blocks of the first non volatile memory used at the time of its record;
   - detecting at each power on if an accidental power off occurred based on said events and states;
   - managing the read/write access to the blocks of the first non volatile memory using the blocks indicated in the last recorded event as the current used blocks when no accidental power off is detected.

In an embodiment the recorded events indicate the current data block and the current map block of the first non volatile memory. The flash translation layer function may check if a current used block is full when no accidental power off is detected and the flash translation layer may select a new block to be used if the current used block is full. The recorded events may indicate at least one next free block of the first non volatile memory.

In a further embodiment, the flash translation layer function further manages a bad block table identifying the defective blocks of the first non volatile memory, said bad block table being stored in the second non volatile memory.

In another embodiment the flash translation layer function is adapted for recording an update of the bad block table in said second non volatile memory. The bad block table stored in said second non volatile memory can be the only bad block table to which the FTL is adapted to access.

In an embodiment the flash translation layer function is stored in said second non volatile memory.

In a further embodiment, said first non volatile memory is NAND-Flash and said second non volatile memory is a NOR-Flash.

In another embodiment said first and second non volatile memories are included in the same chip.

The invention also proposes a method for managing a memory device including a first non volatile memory and a microcontroller including a second non volatile memory, said second non volatile memory being accessible in reading, writing and/or erasing by blocks of a smaller size than the first non volatile memory, said method comprising the following steps:
- recording events and states for block processing of the first non volatile memory in a context metadata log in said second non volatile memory, an event indicating the blocks of the first non volatile memory used at the time of its record;
- detecting at each power on if an accidental power off occurred based on said events and states;
- managing the read/write access to the blocks of the first non volatile memory using the blocks indicated in the last recorded event as the current used blocks when no accidental power off is detected.

In an embodiment a bad block table identifying the defective blocks of the first non volatile memory is stored in the second non volatile memory.

The advantage of the present invention will become apparent from the following description of several embodiments with reference to the accompanying drawings, in which:
- Figure 1 is a schematic view of an embodiment of the invention;
- Figure 2 is a logical diagram illustrating a context log recovery at power on;
- Figure 3 illustrates the structure of an entry in the context log;
- Figure 4 illustrates the structure of an example of context log.

The invention proposes a memory device comprising first and second non volatile memories, both accessible in reading, writing and/or erasing by block. The second non volatile memory is included in a microcontroller. The block size of the second non volatile memory is smaller than that of the first non volatile memory. The invention proposes to maintain a context metadata log describing the history and state of the first non volatile memory in said second non volatile memory. The history notably indicates the block context at the time of its record. Upon reset, the FTL restores this block context from the last recorded event, so that block access may be resumed.

Thanks to the invention, the available storage space in the first non volatile memory is increased. Since the write granularity of the second non volatile memory is better than in the first non volatile memory, the context metadata log occupies less space in the second non volatile memory. Moreover, reliable context metadata can be retrieved very fast at the power on stage if no accidental power off occurred. The memory device is thus made available almost instantaneously for the users.

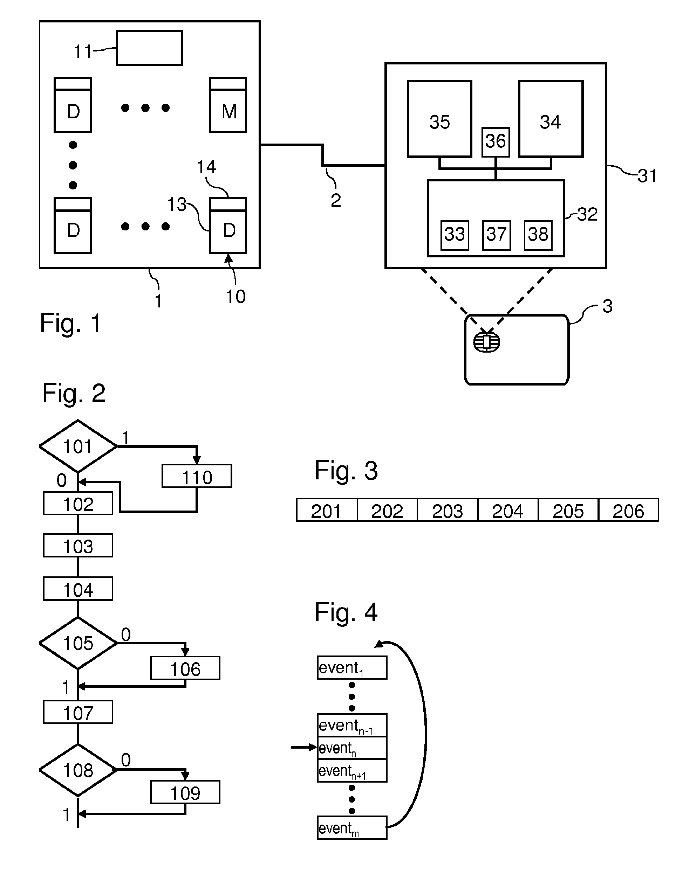

Figure 1 is a schematic view of an embodiment of the invention. A smartcard 3 includes a microcontroller 31. This microcontroller 31 includes a RAM memory 34, a non volatile memory 32, a FTL 36 and a microprocessor 35. The microcontroller 31 is connected to a NAND-Flash memory 1 through a bus 2. The NAND-Flash memory 1 and the microcontroller 31 are embedded in a same chip but are located on different circuits. The size of the NAND Memory 32 can typically be about 256MB, whereas the size of the non volatile memory can typically be about 400 KB. Obviously, different memory sizes can also be used without departing from the teaching of the invention.

The Nand-Flash memory 1 includes a controller 11 and an array of data blocks 12. Each block 12 comprises a data storage area 13. Each page of a block is provided with a spare area 14 to store page information. Among the data blocks 12, some data blocks store user data and FTL metadata and are identified by reference D. Some data blocks store map tables and are identified by reference M.

The NAND block types can be as follows:
Spare block: block reserved to replace malfunctioning blocks;
Bad block: either flagged as such by the manufacturer or flagged when a failure is detected at run time;

| | |
|---|---|
| Current data block: | block used for user data logging; |
| Current map block: | block used for map segments logging; |
| Old data block: | block containing live and/or obsolete data pages; |
| Old map block: | block containing live and/or obsolete map segments; |
| Free block: | erased block to be used as new data/map logging block. |

The non volatile memory 32 is of a different type than NAND-Flash 1. The non volatile memory 32 can notably be of NOR-Flash type. Such memories provide a low write granularity, a high throughput and a good endurance. A NOR-Flash can notably provide a 1 byte granularity for writing operations, which is much better than the NAND-Flash 1.

Memory 32 stores a context metadata log 33. The context metadata log 33 includes a list of events. The list of events can be stored in log 33 according to a sequential cycle. As illustrated at figure 4, the events can be stored in a predefined set of memory slots identified by event₁ to eventₘ. Each time a new event is generated, this event is written in the next slot of the metadata context log. Once the end of the slots is reached, the event in the first slot is erased and overwritten. The context metadata log 33 provides a macroscopic view of the NAND-Flash 1 processing events. One part of the non volatile memory 32 is used as random access memory for storing the NAND-Flash block processing events and their state. The size of the context metadata log 33 can be for instance of several kilobytes, 8 kilobytes for instance. The usual size of a RAM memory 34 in a smartcard is of several Kbytes. Memory 34 includes RAM buffers for FTL read/write operations, in order to limit the access to memory 32. Memory 32 may store the main block processing events, whereas the remaining metadata generated for each NAND-Flash input/output can be stored in the NAND-Flash 1 itself. Thus, the NAND-Flash access rate is not significantly affected by the writing of the metadata.

The FTL 36 notably includes a memory management unit and a block reclamation unit. The FTL 36 can be executed by microprocessor 35.

Though non volatile memory 32 has been disclosed previously for storing the context metadata log 33, memory 32 can also store data for different purposes. Memory 32 can notably store an operating system, a file system or applets like Java applets. Memory 32 can also store drivers for the NAND-Flash 1 for allowing an access by the FTL 36. When the context metadata log 33 shares a common storage in memory 32 with other functions, the advantages of the invention can be obtained without requiring additional components. Thus, the invention can thereby be carried out in a very cost effective way.

Memory 32 may also store a bad block table 37. The bad block table 37 lists the non addressable blocks. If the FTL 36 tries to access one of these blocks, a bad block management unit of the FTL 36 redirects the access request to a spare block. Only one bad block table for NAND-Flash 1 is needed without requiring a copy in RAM. To face possible aborted cycles, two bad block tables 37 may be stored in memory 32. Both bad block tables could be used alternately. Due to the lower writing granularity of memory 32, the space occupied by additional data 38 in memory 32 is smaller than the space that would be occupied in NAND Flash 1. Moreover, space is freed in NAND-Flash 1 for increasing its practical storage capacity. Additionally, due to the reduced access time to the NOR-Flash, the bad block table 37 can be directly read without requesting the bad block table to be copied into RAM memory.

During the lifetime of the NAND-Flash 1, additional bad blocks can appear. When a defective block is detected, the block replacement unit can proceed as follows. If a writing process in a page of this block is not successful, the successfully written pages of the defective block are firstly copied into the new spare block. The unsuccessful page writing operation is carried out anew in the new spare block.

When a write access to a bad block is requested, the bad block management unit identifies that this block shall not be used. The bad block management unit returns the address of a spare block to which the bad block was remapped.

The bad block table 37 can also store a page failure indicator associated to a bad block identifier. Thus, the bad block can still be used as long as the access to the defective page is avoided by the bad block management unit.

Memory 32 may also store additional data 38 relating to the processing of the NAND Flash 1. Additional data 38 can notably include configurable values such as the logical space size in NAND Flash 1 or the mapping space size. As these additional data 38 are stored in memory 32, a good access speed is provided and the space occupied in cache can be reduced.

Figure 2 illustrates an example of a context log recovery process carried out when the memory device is powered on. At step 101, the NAND-Flash 1 and the microcontroller 31 are booted. The FTL locates the last event written in the metadata context log 33 and detects if an accidental power off occurred, based on the state of this event. If the FTL determines that the state does not have a DONE value (value for a successful NAND-Flash processing), it determines that an accidental power off has taken place. The FTL then carries out a block processing repair at step 110 based on previously recorded events. Otherwise, the FTL determines that the last block processing was successfully carried out and it starts to rebuild the context based on this last event at step 102. At step 103, the FTL restores its block context for the NAND-Flash 1 from this last event, like the current data block, the current map block, or the next free block(s). At step 104, the FTL reads the current map block and identifies the next erased map sector. This map sector can be identified by a dichotomic scanning of the current map block. At step 105, the FTL determines if further map sectors are available in the current map block. If no map sectors are available, the FTL allocates a new map block at step 106 as the current map block. If further map sectors are available, the FTL keeps using this map block as the current map block. At step 107, the FTL reads the current data block and identifies the next erased data sector. At step 108; the FTL determines if further data sectors are available in the current data block. If no data sectors are available, the FTL allocates a new data block at step 109. If further data sectors are available, the FTL keeps using this data block as the current data block.

Figure 3 details the structure of an event entry in the context metadata log 33. The size of an entry can be 16 bytes. The processing state is preferably located in the first byte to facilitate its update, corresponding to area 201. The event type is stored in area 202. Area 203 can store the current data block. Area 204 can store the current map block. Area 205 can store the block currently being garbaged (if any). Area 206 can store the free block list.

The FTL software 36 illustrated may be stored in and fetched from the non volatile memory 32. However, the FTL software 36 can also be stored in any suitable memory or combination of memories, for instance a Read Only Memory.

An electronic token usually defines either a smartcard or any portable device using Flash memory. In the illustrated invention, the non volatile memory 32 is located in a smartcard. However, according to the invention, the non volatile memory 32 storing the context metadata log 33 can be housed in any other kind of electronic token.

## Claims

1. Memory device (3), **characterized in that** it comprises :
- a first non volatile memory (1), said first non volatile memory being accessible in reading, writing and/or erasing by blocks;
- a microcontroller (31) including a second non volatile memory (32), said second non volatile memory being accessible in reading, writing and/or erasing by blocks of a size smaller than the first non volatile memory;
- a flash translation layer function (36) :
- managing the read/write access to the blocks of the first non volatile memory (1);
- recording events and states for block processing of the first non volatile memory in a context metadata log (33) in said second non volatile memory (32), an event indicating the blocks of the first non volatile memory (1) used at the time of its record;
- detecting at each power on if an accidental power off occurred based on said events and states;
- managing the read/write access to the blocks of the first non volatile memory using the blocks indicated in the last recorded event as the current used blocks when no accidental power off is detected.

2. Memory device (3) according to claim 1, wherein the recorded events indicate the current data block and the current map block of the first non volatile memory (1).

3. Memory device (3) according to claim 2, wherein the flash translation layer function checks if a current used block is full when no accidental power off is detected and wherein the flash translation layer selects a new block to be used if the current used block is full.

4. Memory device (3) according to claim 2, wherein the recorded events indicate at least one next free block of the first non volatile memory (1).

5. Memory device (3) according to claim 1, wherein the flash translation layer function (36) further manages a bad block table (37) identifying the defective blocks of the first non volatile memory, said bad block table being stored in the second non volatile memory (32).

6. Memory device according to claim 5, wherein the flash translation layer function (36) is adapted for recording an update of the bad block table (37) in said second non volatile memory (32).

7. Memory device (3) according to claim 5, wherein the bad block table (37) stored in said second non volatile memory is the only bad block table to which the FTL is adapted to access.

8. Memory device (3) according to claim 1, wherein the flash translation layer function (36) is stored in said second non volatile memory (32).

9. Memory device (3) according to claim 1, wherein said first non volatile memory (1) is NAND-Flash (1) and wherein said second non volatile memory (32) is a NOR-Flash.

10. Memory device according to claim 1, wherein said first and second non volatile memories are included in the same chip.

11. Method for managing a memory device (3) including a first non volatile memory (1) and a microcontroller (31) including a second non volatile memory (32), said second non volatile memory being accessible in reading, writing and/or erasing by blocks of a smaller size than the first non volatile memory, said method comprising the following steps:
- recording events and states for block processing of the first non volatile memory in a context metadata log (33) in said second non volatile memory (32), an event indicating the blocks of the first non volatile memory (1) used at the time of its record;
- detecting at each power on if an accidental power off occurred based on said events and states;
- managing the read/write access to the blocks of the first non volatile memory using the blocks indicated in the last recorded event as the current used blocks when no accidental power off is detected.

12. Method according to claim 11, wherein a bad block table (37) identifying the defective blocks of the first non volatile memory is stored in the second non volatile memory.
